# EUROPEAN PATENT SPECIFICATION

(11) **EP 2 233 282 B1**
(45) Date of publication and mention of the grant of the patent: **05.11.2014**
(21) Application number: 10154993.9
(22) Date of filing: 01.03.2010
(51) Int. Cl.: B30B 15/28, B30B 15/14, G05B 19/4061, B30B 1/26

(54) **Press machine**
Presse
Presse

(30) Priority: 24.03.2009 JP 2009072657
(43) Date of publication of application: 29.09.2010
(73) Proprietor: Kabushiki Kaisha Yaskawa Denki, Kitakyushu-shi, Fukuoka 806-0004 (JP)
(72) Inventor: INOUE, Takeki, Fukuoka Fukuoka 806-0004 (JP); SHIOZAKI, Yuji, Fukuoka Fukuoka 806-0004 (JP)
(74) Representative: Gendron, Vincent Christian

(56) References cited:
- DE-A1-102008 003 499
- US-A- 5 822 212
- US-A1- 2001 012 973
- US-A1- 2006 193 935

## Description

### BACKGROUND OF THE INVENTION

### 1. Field of the Invention

The present invention relates to a press machine for press-forming a metal plate (i.e., a material to be press-formed, called a "workpiece" hereinafter) with a die, and to a motor control device for the press machine. More particularly, the present invention relates to a press machine for detecting intrusion of a foreign body (caused, for example, when a foreign body is caught in or when a small chip of the workpiece is entrained) without arranging a dedicated sensor or the like, and also relates to a motor control device for the press machine.

### 2. Description of the Related Art

A first related art "relates to a press apparatus for clamping a material to be pressed (i.e., a workpiece) to a die by using a stripper, for example, and pressing the clamped workpiece by a pressing operation using an upper die unit and a lower die unit, wherein a detection device detects a foreign body in such an arrangement that the stripper and the upper die unit are movable relative to each other". The first related art has "an object to provide a press apparatus in which the detection device senses electrical conductivity to precisely detect a foreign body which is present between the stripper and the workpiece or the die, and the pressing operation can be stopped at the same time as the detection of the foreign body". (See, e.g., Japanese Unexamined Patent Application Publication No. 2007-054844, pages 3-5 and Fig. 1.)

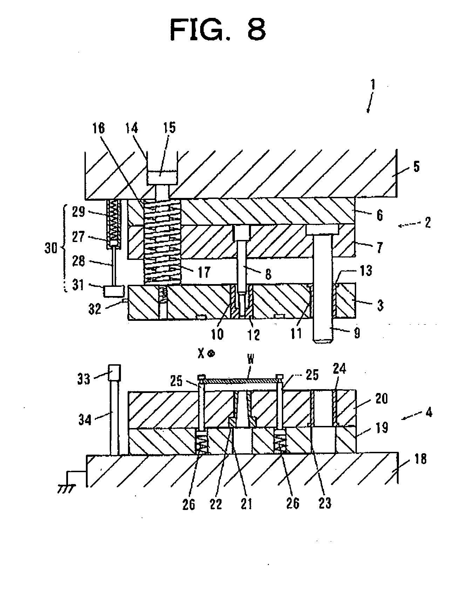

Fig. 8 is a schematic view illustrating the construction of a press apparatus in which the foreign-body detection device according to the first related art is disposed. Be it noted that reference numerals in Fig. 8 are the same as those used in the above-cited Patent Application Publication representing the first related art.

Referring to Fig. 8, "a press apparatus 1 in which a workpiece W is clamped to a die 20 by using a stripper 3 and the clamped workpiece W is pressed by a pressing operation using an upper die unit 2 and a lower die unit 4 includes a detection device 30 disposed on the upper die unit 2, and a contact piece 32 coming into contact with the detection device 30 to establish electrical conductivity when the stripper 3 is moved relative to the upper die unit 2 due to a foreign body (matter) M present between the stripper 3 and the die 20 or the workpiece W".

A second related art "relates to a method of detecting a foreign body within a die room of a press machine and a safety device". An object of the second related art is to provide "a method of detecting a foreign body within a die room of a press machine in which a die is installed, the method comprising the steps of detecting and storing a standby-state pattern, which is a shape pattern positioned near the die, by pattern detection means when the press machine is in a standby state, detecting a startup-state pattern, which is a shape pattern positioned near the die, by the pattern detection means when the press machine is started up, comparing the detected startup-state pattern with the stored standby-state pattern, determining the presence of an abnormality when both the compared patterns are not matched with each other, stopping a slide when the presence of the abnormality is determined, and notifying the presence of the abnormality by abnormality notification means when the presence of the abnormality is determined. (See, e.g., Japanese Unexamined Patent Application Publication No. 2001-259899, pages 3-6 and Fig. 2.)

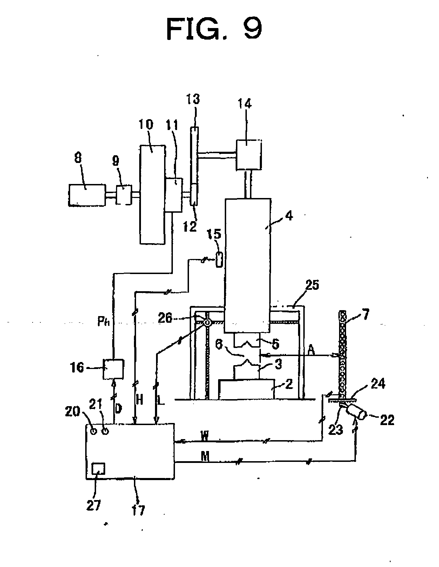

Fig. 9 is a schematic view illustrating the construction of a press machine according to the second related art, which is provided with a safety device in relation to the detection of the foreign body. Be it noted that reference numerals in Fig. 9 are the same as those used in the above-cited Patent Application Publication representing the second related art.

Referring to Fig. 9, "an output shaft of an electric motor 8 serving as a driving source for a press machine 1 is coupled through a reduction gear 9 to a flywheel 10 for smoothing the operation of the press machine 1. Also, an output shaft of the flywheel 10 is coupled to a first gear 12 through a clutch and brake 11. When output rotation of the flywheel 10 is to be transmitted to the first gear 12, a clutch of the clutch and brake 11 is brought into an engaged state and a brake thereof is not actuated. When rotation of the first gear 12 is to be stopped, the clutch of the clutch and brake 11 is brought into a disengaged state and the brake thereof is actuated.A second gear 13 having a larger number of teeth than the first gear 12 is meshed with the first gear 12, and a crank mechanism 14 is mounted to an output shaft of the second gear 13. A vertically moving slide 4 is mounted to an output portion of the crank mechanism 14 for converting a rotary motion of the second gear 13 to a sliding motion, and an upper die 5 is mounted to a lower surface of the slide 4. On the other hand, a lower die 3 is mounted to an upper surface of a bolster 2 at a position opposed to the upper die 5."

A third related art is intended "to more reliably prevent an accident in a transfer apparatus for a press". More specifically, the third related art provides " a transfer apparatus for controlling a position of a beam which is three-dimensionally moved by a servo control device independent of a driving mechanism for a transfer press, wherein the transfer apparatus includes a device for detecting an abnormality by monitoring torque, the device being featured in that a torque value actually measured in normal operation for each particular transfer pattern is set as a reference torque value for the relevant pattern, an allowable torque range specified as an upper limit torque value and a lower limit torque value, which are obtained respectively by adding and subtracting a preset deviation value to and from the reference torque value, is calculated and stored in a control device, and each time the transfer press is actually operated with the particular transfer pattern thereafter, an actual torque value is measured and compared with the allowable torque range to detect the moment when the actual torque value deviates from the allowable torque range, whereby the abnormality detection device momentarily detects an abnormality, such as dropping or jamming (intrusion) of an unspecific member, a lubrication failure, and idling of a servomotor, which cannot be prevented by the known positional control of a beam, etc." (See, e.g., Japanese Unexamined Patent Application Publication No. 7-275971, page 4 and Fig. 1.)

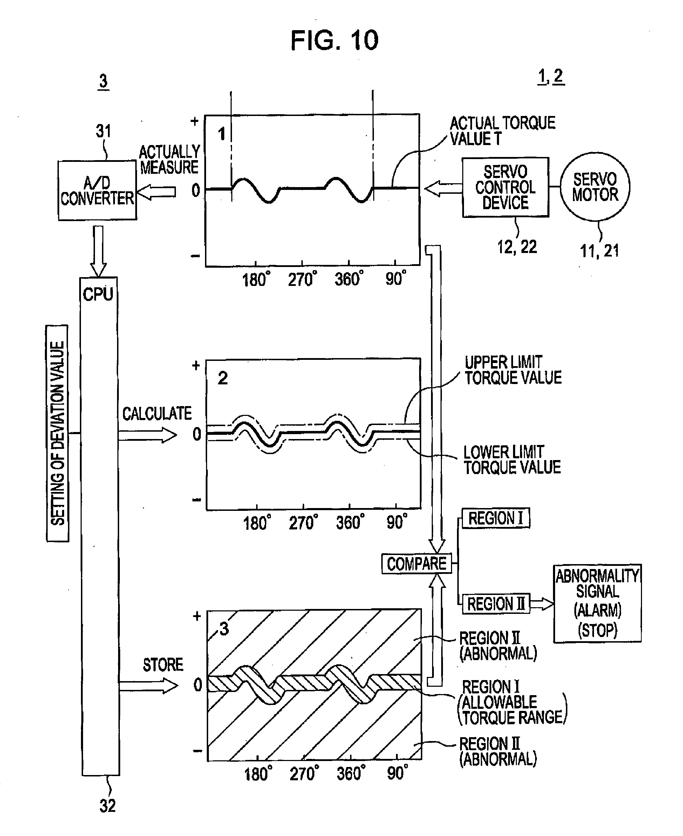

Fig. 10 is a schematic view illustrating the configuration of the transfer apparatus in the press in which the abnormality detection device is disposed. Be it noted that reference numerals in Fig. 10 are the same as those used in the above-cited Patent Application Publication representing the third related art.

Referring to Fig. 10, "In a transfer apparatus for controlling movement of a beam in its position by operations of servomotors 11 and 21 in driving devices 1 and 2 through servo control devices 12 and 22, respectively, to be synchronized with operation of a press main unit, an actual torque value T measured in normal operation for each particular transfer pattern is set as a reference, and an allowable torque range is calculated and stored as upper and lower limit torque values, which are obtained respectively by adding and subtracting a preset deviation value to and from the reference in a CPU 32 of a control device 3. Information processing is incorporated in the transfer apparatus such that, when press-forming operation is performed later by using the same transfer pattern, whether the actual torque value falls within the stored allowable torque range is determined by comparing them, and if the actual torque value deviates from the allowable torque range, the deviation is detected immediately."

Thus, according to the above-described related arts, the detection of the foreign body in the press machine is performed based on the output value of the external detection device disposed separately (Japanese Unexamined Patent Application Publication No. 2007-054844), as well as based on change in the torque value from the servomotor and change in shape near the die (Japanese Unexamined Patent Application Publication No. 2001-259899 and No. 7-275971) without employing the external detection device. Meanwhile, a method of detecting the intrusion of the foreign body without employing the external detection device can also be practiced by regarding the intrusion of the foreign body as a disturbance imposed on a servomotor, and by detecting or estimating the disturbance to determine whether the intrusion of the foreign body is present.

According to a fourth related art, a disturbance estimation observer is disposed and the presence of a disturbance is detected when the amplitude of the disturbance estimated by the disturbance estimation observer exceeds a set value defined in advance (see, e.g., Japanese Unexamined Patent Application Publication No. 03-196313 (pages 2 to 4 and Fig. 1).

According to a fifth related art, in combination with the fourth related art, the presence of a disturbance is also detected when the estimated amount of change in the disturbance exceeds a set value defined in advance (see, e.g., Japanese Unexamined Patent Application Publication No. 11-254380 (pages 3 to 5 and Fig. 4).

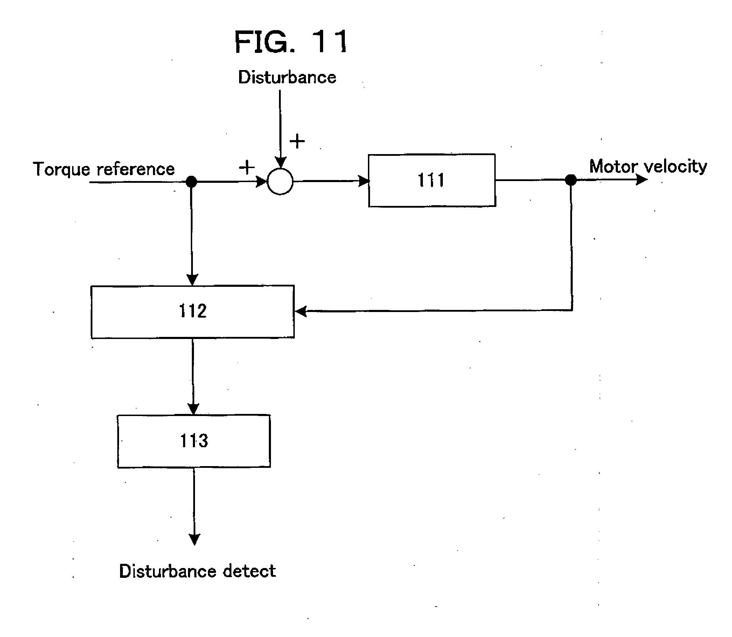

Fig. 11 is a block diagram illustrating a processing flow for disturbance detection in the fourth related art. In Fig. 11, reference numeral 111 denotes a motor. A torque command value output from a servo amplifier (not shown) to the motor 111 and a rotational speed of the motor 111 (i.e., a motor velocity) are input to a disturbance observer 112. The disturbance observer 112 calculates an estimated disturbance value from the torque command value and the motor velocity and outputs the estimated disturbance value to a comparator 113. The comparator 113 compares a set value defined in advance with the estimated disturbance value and detects the presence of a disturbance if the estimated disturbance value exceeds the set value.

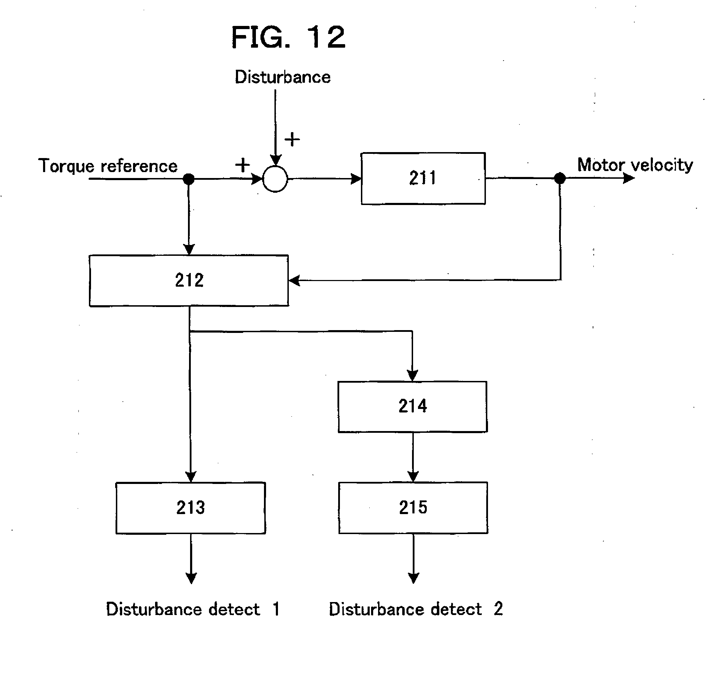

Fig. 12 is a block diagram illustrating a processing flow for disturbance detection in the fifth related art. In Fig. 12, reference numeral 211 denotes a motor. A torque command value output from a servo amplifier (not shown) to the motor 211 and a rotational speed of the motor 211 (i.e., a motor velocity) are input to a disturbance observer 212. The disturbance observer 212 calculates an estimated disturbance value from the torque command value and the motor velocity and outputs the estimated disturbance value to a comparator 213 and a differentiator 214. The differentiator 214 differentiates the estimated disturbance value with respect to time and outputs a change rate of the estimated disturbance value to a comparator 215. The comparator 213 compares a set value defined in advance with the estimated disturbance value and detects the presence of a disturbance if the estimated disturbance value exceeds the set value (disturbance detection 1). The comparator 215 compares a set value defined in advance as a value differing from the set value in the comparator 213 with an output value of the differentiator 214 (i.e., with the change rate of the estimated disturbance value) and detects the presence of a disturbance if the output value of the differentiator 214 (i.e., the change rate of the estimated disturbance value) exceeds the set value (disturbance detection 2). Then, the presence of the disturbance is eventually detected if the disturbance detection 1 or the disturbance detection 2 is confirmed.

With the above-described disturbance detection methods according to the related arts, the disturbance estimation observer is disposed and the presence of the disturbance is detected when the estimated disturbance value estimated by the disturbance estimation observer exceeds the set value defined in advance, or when momentary change in the estimated disturbance value (i.e., the change rate of the estimated disturbance value) exceeds the set value defined in advance.

In the related-art press machines, it has been increasingly demanded to detect the intrusion of the foreign body without arranging any proximity sensor such as employed in the first related art. From that point of view, there are known techniques, as proposed in the second and third related arts, for detecting the intrusion of the foreign body based on change in the torque value from the servomotor and change in the shape pattern near the die without arranging any sensor or the like, e.g., a proximity sensor, to thereby reduce the price of the press machine and to cut labor and time necessary for arranging and adjusting the sensor or the like.

However, the second related art has the problem that, because the intrusion of the foreign body is detected based on change in the shape pattern near the die between the standby state and the startup state, the intrusion of the foreign body cannot be detected at high detection accuracy with respect to change in the shape pattern near the die when a small foreign body is caught in. The third related art also has the problem that, because change in the torque value from the servomotor is simply compared with the set value, large change in the torque value cannot be obtained when a small foreign body is caught in.

Generally, a press machine of the type described above includes an upper die and a lower die which are driven by respective servomotors. One of the servomotors drives a crank mechanism through a mechanical mechanism using a plurality of gears such that the upper die reciprocates.The lower die is held at a commanded position by the other servomotor through a rack and pinion.

Such a press machine has a possibility that foreign bodies differing in thickness and size, for example, may be intruded (or caught in). However, it is difficult to define the set value for the reason that disturbances imposed on the servomotor are changed to a large extent with the intrusion of those foreign bodies. As another example, when small foreign bodies are caught in, the intrusion of those small foreign bodies does not impose so large disturbances on the servomotor. Further, even when no foreign bodies are caught in (i.e., even in the case of normal state), a reaction force, etc. are generated due to change in the moment of inertia caused by a crank mechanism for converting a rotary motion to a reciprocating motion and are detected as disturbances at all times. The reaction force, etc. due to an influence of change in the moment of inertia caused by the crank mechanism for converting a rotary motion to a reciprocating motion may possibly become disturbances larger than a reaction force generated by the intrusion of foreign bodies. Thus, the intrusion of only the foreign bodies having sizes larger than a certain value can be detected.

The disturbance detection method according to the fourth or fifth related art includes the disturbance estimation observer and detects the presence of the disturbance when the estimated disturbance value estimated by the disturbance estimation observer exceeds the set value defined in advance, or when momentary change in the estimated disturbance value (i.e., the change rate of the estimated disturbance value) exceeds the set value defined in advance. Namely, the related-art disturbance detection method simply compares the set value defined in advance and the estimated disturbance value with each other. Stated another way, the disturbance detection methods according to the fourth and fifth related arts can detect only the foreign bodies causing larger disturbances than the steadily generated disturbances (such as the reaction force due to change in the moment of inertia caused by the crank mechanism for converting a rotary motion to a reciprocating motion) and have a difficulty in defining the set value because the estimated disturbance value is changed to a large extent depending on difference in thickness of the foreign body.

The third related art also has similar problems to those with the fourth and fifth related arts because change in the torque value from the servomotor is simply compared in the former.

Thus, the third to fifth related arts cannot detect the intrusion of small foreign bodies for the reason that, when there are disturbances (such as reaction force due to change in the moment of inertia caused by the crank mechanism for converting a rotary motion to a reciprocating motion) in the state of no foreign bodies being caught in (i.e., in the normal state), a reference value has to be set smaller than those disturbances (generally called a steady disturbance) in order to detect the intrusion of small foreign bodies (e.g., small foreign bodies having thicknesses smaller than 5 mm) into the press machine. Also, in order to detect the intrusion of various foreign bodies (e.g., foreign bodies differing in thickness and size) into the press machine, the reference value has to be set while changing it depending on the thickness and/or the size of each foreign body that is possibly caught in, and a difficulty arises in detecting the intrusion of various foreign bodies. Thus, to cope with the case of detecting the intrusion of various foreign bodies, the external detection device such as the sensor used in the first embodiment is required, which raises the problems that the price of the press machine cannot be reduced and labor and time necessary for arranging and adjusting the sensor or the like cannot be cut.

The patent document US 2006/193935 discloses a press-machine according to the preamble of claim 1.

### SUMMARY OF THE INVENTION

The present invention has been made in view of the problems described above, and an object of the present invention is to provide a press machine and a motor control device for the press machine, which are capable of, even when the steady disturbance is present with respect to a press shaft of the press machine (herein, the press shaft is defined as including a crank mechanism, a mechanical mechanism, and a servomotor in association with an upper die, and a cushion shaft is defined as including a rack and pinion and a servomotor in association with a lower die), and/or even when foreign bodies differing in thickness and size are caught in the press machine, reliably detecting those foreign bodies causing disturbances smaller than the steady disturbance (e.g., small foreign bodies having thicknesses smaller than 5 mm) and various foreign bodies (e.g., foreign bodies differing in thickness and size) without arranging any sensor or the like dedicated for detecting the intrusion of foreign bodies, as well as realizing reduction in the price and the size of the press machine and increasing reliability thereof.

To overcome the problems described above, the present invention is constituted according to claim 1.

There is provided a press machine having a press shaft and a cushion shaft for cooperatively pressing a workpiece, the press machine comprising a motor for driving an upper die, which is mounted to the press shaft, through a mechanical mechanism and a motor control device for supplying electric power to the motor, wherein the motor control device includes a disturbance observer unit for calculating an estimated disturbance value with respect to the motor based on a torque command and a motor velocity, and an intrusion detection section for detecting, based on the estimated disturbance value, a state of a foreign body being caught between the press shaft and the cushion shaft.

In the press machine according to the present invention, the intrusion detection section comprises an absolute value calculation unit for receiving the estimated disturbance value and calculating an absolute value of the estimated disturbance value, a position coefficient processing unit for receiving the absolute value of the estimated disturbance value and assigning a weight to the estimated disturbance value depending on a position of the upper die, an integrator for integrating an output of the position coefficient processing unit during a period in which the upper die is moved over a predetermined zone within a movable range of the upper die, and a comparator for receiving an output of the integrator, comparing the output of the integrator with a set value defined in advance, and determining whether the state of the foreign body being caught in is present, and when the output of the integrator exceeds the set value defined in advance, the comparator determines that the state of the foreign body being caught in is present.

According to claim 2, in the press machine according to claim 1, the position coefficient processing unit has a function for changing a coefficient depending on a position of the upper die within a vertically movable range thereof such that the coefficient takes a value of 1 when the upper die is positioned at the bottom dead center, and takes a value gradually decreasing from 1 as the upper die is positioned farther away from the bottom dead center thereof, and the position coefficient processing unit outputs a value calculated as the product of the coefficient decided based on the function and the absolute value of the estimated disturbance value.

According to claim 3, in the press machine according to the claim 1 or 2, the intrusion detection section comprises an absolute value calculation unit for receiving the estimated disturbance value and calculating an absolute value of the estimated disturbance value, a position coefficient processing unit for receiving the absolute value of the estimated disturbance value and assigning a weight to the estimated disturbance value depending on a position of the upper die, an integrator for integrating an output of the position coefficient processing unit during a period in which the upper die is moved over a predetermined zone within a movable range of the upper die, and a comparator for sampling an output of the integrator per predetermined time, comparing a current sampling value with a sampling value in a just preceding cycle or a further before cycle, and determining, based on a comparison result, whether the state of the foreign body being caught in is generated, and when the output of the integrator exceeds the set value defined in advance, the comparator determines that the state of the foreign body being caught in is generated.

According to Claim 4, in the press machine according to anyone of Claim 1 to 3, when the motor control device detects the state of the foreign body being caught in, the press machine outputs, to the exterior, information indicating the state of the foreign body being caught in.

With the features of claim 4, even when the steady disturbance (such as the reaction force due to change in the moment of inertia caused by the crank mechanism for converting a rotary motion to a reciprocating motion) is imposed on the press shaft of the press machine, a disturbance having a smaller amplitude than that of the steady disturbance or a disturbance varying in a shorter vibration cycle than that of the steady disturbance can be reliably detected, which is caused due to the intrusion of the foreign body (for example, when the foreign body is caught in or when a small chip of the workpiece is entrained), without arranging any sensor or the like dedicated for detecting the intrusion of the foreign body. Further, it is possible to realize reduction in the price and the size of the press machine, and to increase reliability thereof.

With the features of the present invention, in addition to the advantages described above, the set value to be preset in the comparator in the final stage can be more easily defined and the intrusion of the foreign body can be detected with higher accuracy and higher reliability.

Upon detecting the intrusion of the foreign body, the press machine can be stopped at once and the state of the foreign body being caught between the press shaft and the cushion shaft can be notified to a worker or another person. After the worker or the other person has eliminated the state of the foreign body being caught between those shafts, the press machine can be safely operated again. In addition, with the features of Claims 3 and 4, the presence of an abnormality can be easily determined.

### BRIEF DESCRIPTION OF THE DRAWINGS

Fig. 1 is a schematic view of a press machine according to an embodiment of the present invention.
Fig. 2 is a block diagram illustrating a processing flow of disturbance detection in the press machine according to an embodiment of a reference example[0046]
Fig. 3 is a graph illustrating an estimated disturbance waveform when a foreign body is not placed (caught) in the press machine according to the embodiment of the reference example.
Fig. 4 is a graph illustrating an estimated disturbance waveform when a foreign body is placed (caught) in the press machine according to the embodiment of the reference example.
Fig. 5 is a graph illustrating an integrated waveform of an estimated disturbance value when the foreign body is placed (caught) in the press machine according to the embodiment of the reference example.
Fig. 6 is a block diagram illustrating a processing flow of disturbance detection in a press machine according to an embodiment of the present invention.
Fig. 7 is a graph illustrating an integrated waveform of an estimated disturbance value when the foreign body is placed (caught) in the press machine according to the embodiment of the present invention.
Fig. 8 is a schematic view illustrating the construction of a device for detecting intrusion of a foreign body according to a first related art.
Fig. 9 is a schematic view illustrating a method of detecting a foreign body in a die room of a press machine according to a second related art.
Fig. 10 is a schematic view illustrating the configuration of a transfer apparatus in a press according to a third related art.
Fig. 11 is a block diagram illustrating a processing flow of disturbance detection according to a fourth related art.
Fig. 12 is a block diagram illustrating a processing flow of disturbance detection according to a fifth related art.

### DESCRIPTION OF THE PREFERRED EMBODIMENTS

Embodiments of a reference example (first embodiment) and of the present invention (second embodiment) will be described below with reference to the drawings.

### (First Embodiment)

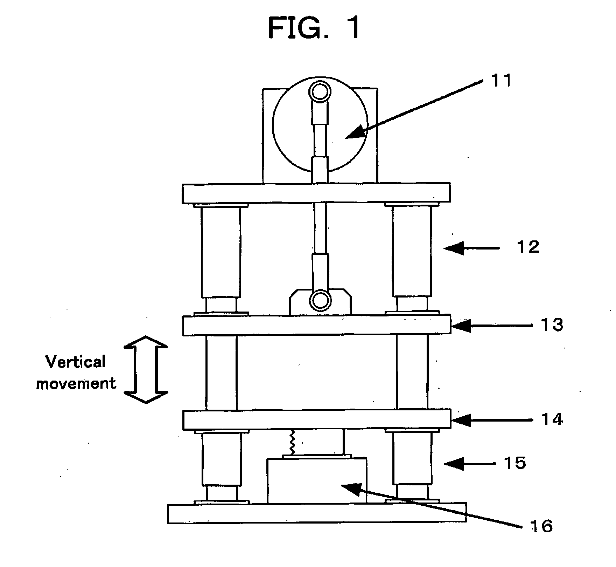

Fig. 1 is a schematic view of a press machine according to an embodiment of the present invention. Referring to Fig. 1, the press machine includes a crank mechanism 11, a press shaft 12, an upper die 13, a lower die 14, a cushion shaft 15, and a rack and pinion 16. The crank mechanism 11 driven by a servomotor (not shown) is mounted to the upper die 13. The servomotor drives the upper die 13 through a mechanical mechanism (not shown), which includes a plurality of gears, in accordance with a command from a motor control device such as a servo amplifier.

The press shaft 12 vertically moves the upper die 13 at a constant velocity by using the crank mechanism 11 under velocity control. The cushion shaft 15 holds the lower die 14 at a constant position by using the rack and pinion 16 under position control. When the upper die 13 mounted to the press shaft 12 is moved downward, the upper die 13 reaches a position to press the lower die 14 under pressure, and thereafter the upper die 13 and the lower die 14 are moved downward together. When the upper die 13 is moved upward, the lower die 14 is also moved upward to a commanded position through the rack and pinion 16.

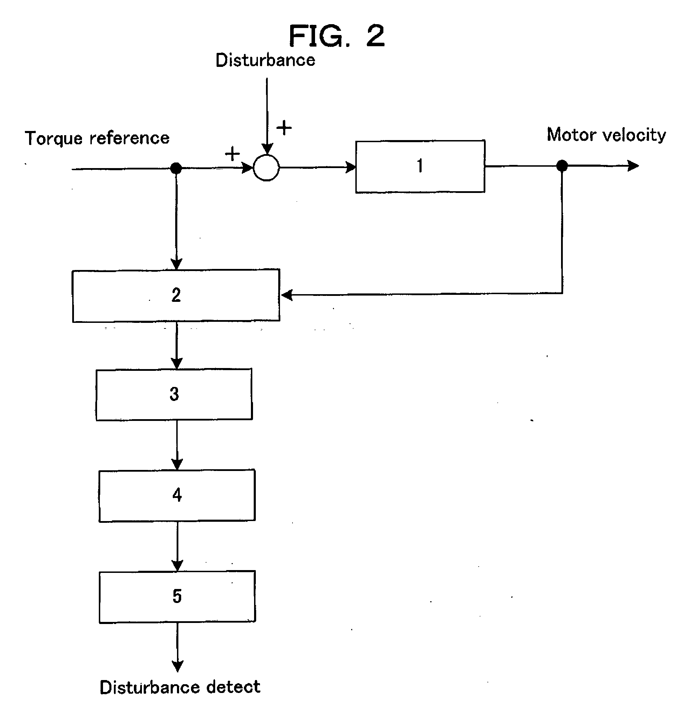

Fig. 2 is a block diagram illustrating a processing flow of disturbance detection in the press machine according to the first embodiment. Referring to Fig. 2, the press machine includes a motor (servomotor) 1, a disturbance observer 2, an absolute value calculation unit 3, an integrator 4, and a comparator 5. A disturbance detected herein means intrusion of a foreign body into the press machine (caused, for example, when a small foreign body is caught in or when a small chip of the workpiece is entrained, as described above). The disturbance detection is performed the control device (not shown), such as the servo amplifier, in the press machine. Upon the detection of a disturbance, the press machine according to the first embodiment is stopped and a worker or another person is notified of the fact that the intrusion of the foreign body is caused. After the worker or the other person has removed the intruded foreign body, the operation of the press machine is resumed.

A torque command value output from the control device (not shown), such as the servo amplifier, to the motor 1 and a rotational speed of the motor 1 (i.e., a motor velocity) are input to the disturbance observer 2. The disturbance observer 2 calculates an estimated disturbance value from the torque command value and the motor velocity, and then outputs the estimated disturbance value to the absolute value calculation unit 3. The absolute value calculation unit 3 calculates an absolute value of the estimated disturbance value and outputs the calculated absolute value to the integrator 4. The technical meaning of the absolute value calculation unit 3 will be described later. During a period in which the crank mechanism 11 for the press shaft 12 of the press machine according to the first embodiment is rotated through a predetermined rotational angle, the integrator 4 continuously integrates the absolute value of the estimated disturbance value and outputs the integrated value to the comparator 5. The comparator 5 compares a set value defined in advance with the output value of the integrator 4 and detects the presence of a disturbance if the output value of the integrator 4 exceeds the set value.

The motor velocity can be obtained by using an output signal of a position or velocity sensor (not shown) which is connected to the motor 1. The disturbance observer 2 for calculating and outputting the estimated disturbance value based on the torque command value and the motor velocity can be provided by using suitable one of known disturbance observers. Further, because the specifications of the press machine, such as a gear ratio between the mechanical mechanism using the plurality of gears to drive the crank mechanism 11 and the servomotor are known in advance, one rotation of the crank mechanism 11 for the press shaft 12 of-the press machine can be obtained based on the specifications (note that if the upper die 13 is directly driven by the servomotor just through the crank mechanism 11, one rotation of the servomotor corresponds to one rotation of the crank mechanism 11). ,

Thus, the first embodiment differs from related arts in that the former does not include any sensor or the like which is dedicated for detecting the intrusion of the foreign body, and that instead of simply comparing the estimated disturbance value with the set value defined in advance, the absolute value of the estimated disturbance value is continuously integrated during the period in which the crank mechanism for the press shaft is rotated through the predetermined rotational angle, and the integrated value is compared with the set value defined in advance to determine the intrusion of the foreign body based on the comparison result.

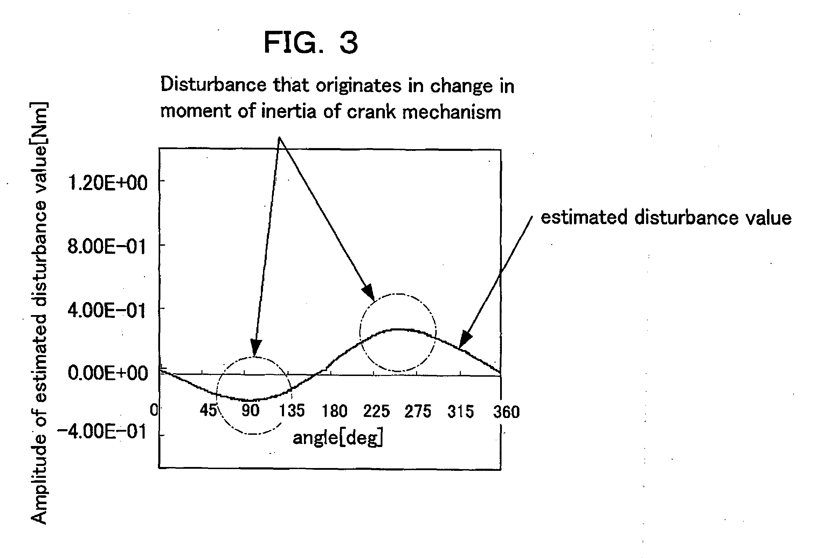

Fig. 3 is a graph illustrating an estimated disturbance waveform when a foreign body is not placed (caught) in the press machine according to the first embodiment. In the graph of Fig. 3, the vertical axis represents the amplitude of the estimated disturbance value, and the horizontal axis represents the rotational angle (0° to 360°) of the crank mechanism 11 for the press shaft 12.

In the graph of Fig. 3, a solid line represents the estimated disturbance waveform, and a range covering substantially the entire graph along the horizontal axis corresponds to one rotation (360° in terms of angle) of the crank mechanism 11 for the press shaft 12. Two circles indicated by one-dot-chain lines in the left and right sides of the graph represent zones in each of which a disturbance occurs due to change in the moment of inertia caused by the crank mechanism 11 for the press shaft 12. Such a disturbance has a maximum amplitude when the rotational angle of the crank mechanism 11 is 90° and 270°, for example.

Thus, in the press machine according to the first embodiment, there is a steady disturbance when the intrusion of the foreign body is not caused (i.e., in the normal state). For the reason that the steady disturbance illustrated in Fig. 3 may deflect to the positive and the negative from a reference which is set to zero of the amplitude of the estimated disturbance value, the absolute value calculation unit 3 calculates the absolute value of the estimated disturbance value and outputs the absolute value to the integrator 4, as described above, thereby detecting the intrusion of the foreign body.

In the case where the servomotor directly drives the upper die 13 just through the crank mechanism 11, the rotational angle of the crank mechanism 11 is 0° or 360° at the top dead center of the upper die and is 180° at the bottom dead center of the upper die.

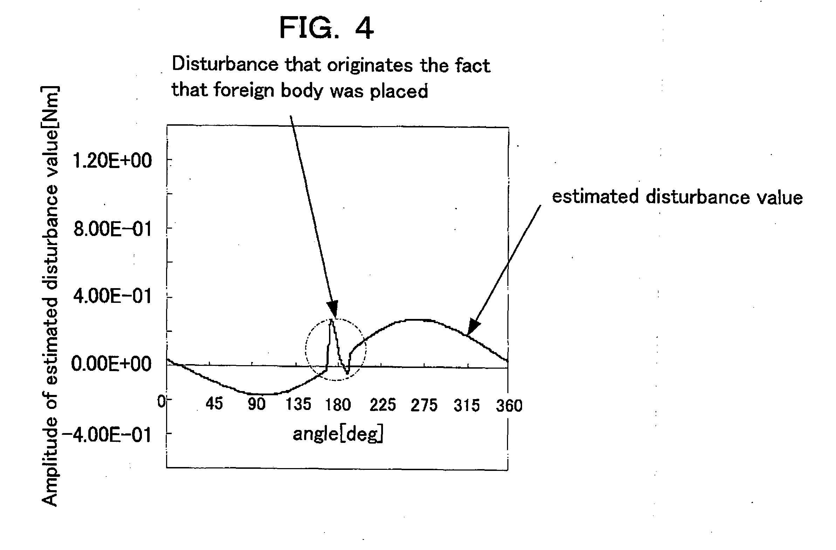

Fig. 4 is a graph illustrating an estimated disturbance waveform when a foreign body is placed (caught) in the press machine according to the first embodiment. In the graph of Fig. 4, the vertical axis represents the amplitude of the estimated disturbance value, and the horizontal axis represents the rotational angle (0° to 360°) of the crank mechanism 11 for the press shaft 12. Also, in the graph of Fig. 4, a solid line represents the estimated disturbance waveform, and a range covering substantially the entire graph along the horizontal axis corresponds to one rotation (360° in terms of angle) of the crank mechanism 11 for the press shaft 12. Fig. 4 represents the case when the operation of the press machine is set to the same operating conditions as those in the case of Fig. 3 and a small foreign body is intentionally placed on the lower die 14 so as to cause the intrusion of the foreign body in an artificial manner.

A circle indicated by a one-dot-chain line in a central area of Fig. 4 represents a zone where a disturbance occurs due to the intrusion of the foreign body in a smaller amplitude than that of the steady disturbance (i.e., the disturbance originating in change in the moment of inertia of the crank mechanism 11) illustrated in Fig. 3. The disturbance originating in the intrusion of the foreign body occurs over a range with its center corresponding to the time when the upper die 12 is positioned at the bottom dead center (i.e., when the rotational angle of the crank mechanism 11 is 180°).

Thus, the range of rotational angle of the crank mechanism 11 in which the disturbance originating in the intrusion of the foreign body occurs is limited to a certain angular range around 180° as a reference. In the following, this embodiment is described on condition that the rotational angles 110° to 250° of the crank mechanism 11 for the press shaft 12 are a predetermined angular range of the crank mechanism 11 in which the disturbance originating in the intrusion of the foreign body occurs. Be it noted that the predetermined angular range can be properly defined as required.

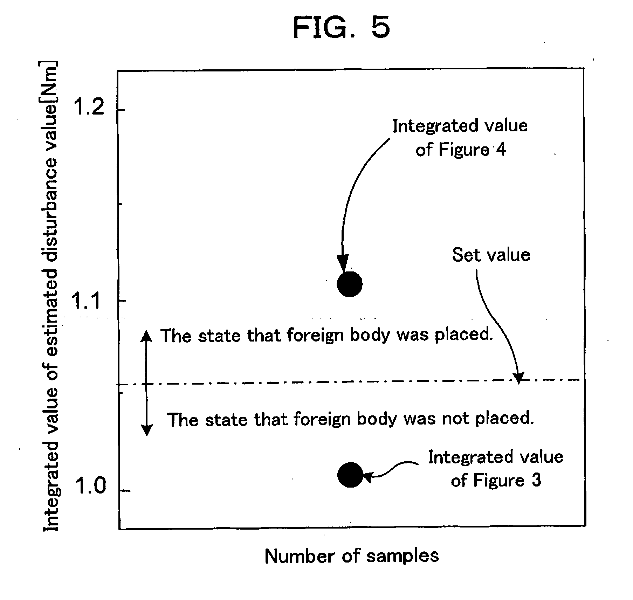

Fig. 5 is a graph illustrating an integrated result of the absolute value of the estimated disturbance value in the press machine according to the first embodiment . In the graph of Fig. 5, the vertical axis represents an integrated value of the absolute value of the estimated disturbance value over the range in which the crank mechanism 11 mounted to the upper die 13 rotates from 110° to 250°, and the horizontal axis represents the total number of samples (sampling points) over the range in which the crank mechanism 11 rotates from 110° to 250°.

A black circle at an upper position in Fig. 5 represents a value obtained by, when the intrusion of the foreign body is caused (e.g., in the state illustrated in Fig. 4), continuously integrating the estimated disturbance value during a period in which the crank mechanism 11 for the press shaft 12 rotates from 110° to 250° (i.e., over the angular range from 110° to 250° of the crank mechanism 11 in which the disturbance originating in the intrusion of the foreign body occurs as illustrated in Fig. 4). A black circle at a lower position in Fig. 5 represents a value obtained by, when the intrusion of the foreign body is not caused, namely when only the steady disturbance is generated, (e.g., in the state illustrated in Fig. 3), continuously integrating the estimated disturbance value during the period in which the crank mechanism 11 for the press shaft 12 rotates from 110° to 250°. In each of the case where the intrusion of the foreign body occurs and the case where the intrusion of the foreign body does not occur (i.e., only the steady disturbance generates), data is sampled at intervals of 3 ms. In each case, therefore, the data is integrated during a period of 7.75 s over 2600 samples corresponding to the angular range from 110° to 250° of the crank mechanism 11.

In the press machine according to the first embodiment, by continuously taking the absolute value of the estimated disturbance value and integrating the absolute value during the period in which the crank mechanism for the press shaft rotates from 110° to 250°, an apparent difference in the integrated value can be obtained with respect to a level, which is indicated, for example, by a one-dot-chain line in Fig. 5, between when only the steady disturbance is generated and when the intrusion of the foreign body is caused.

Accordingly, the intrusion of the foreign body can be detected only when the intrusion of the foreign body is caused, by providing the level indicated by the one-dot-chain line in Fig. 5 as a set value that is to be preset in the comparator. (Second Embodiment)

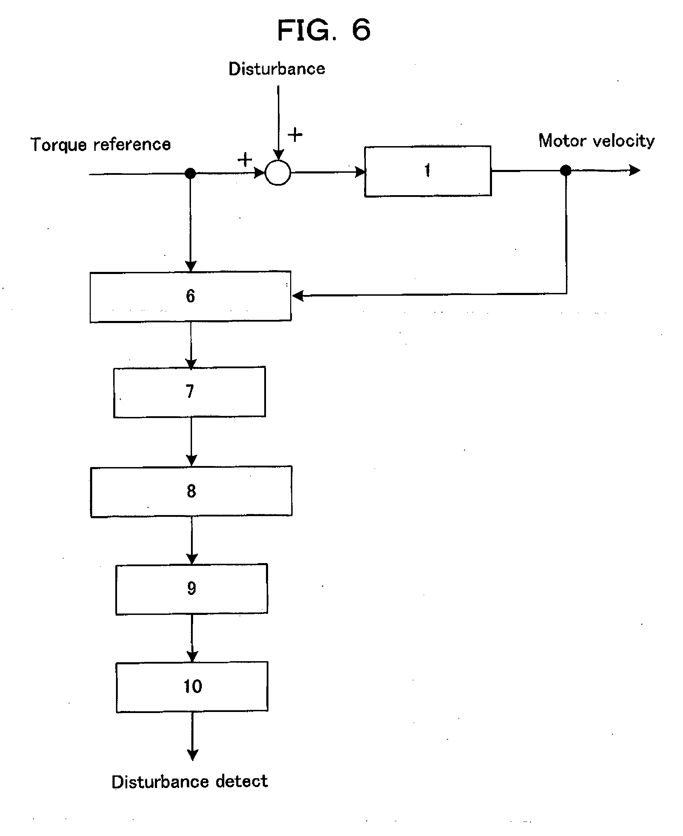

Fig. 6 is a block diagram illustrating a processing flow of disturbance detection in the press machine according to a second embodiment of the present invention. Referring to Fig. 6, the press machine includes a motor (servomotor) 1, a disturbance observer 6, an absolute value calculation unit 7, a position coefficient processing unit 8, an integrator 9, and a comparator 10. The second embodiment differs from the first embodiment (Fig. 2) in including the position coefficient processing unit 8 for receiving the absolute value of the estimated disturbance value, which is an output of the absolute value calculation unit 7, and the integrator 9 for integrating an output of the position coefficient processing unit 8. The other configuration is the same as that in the first embodiment, and hence a description thereof is omitted.

The position coefficient processing unit 8 assigns a weight to the estimated disturbance value depending on the position of the upper die 13 mounted to the press shaft 12 in relation to a possibility that the intrusion of the foreign body occurs, by calculating the product of a coefficient decided based on a certain function and the absolute value of the estimated disturbance value.

The certain function is set to provide such a coefficient as taking a value of 1 at the position where the upper die 13 mounted to the press shaft 12 is pressed against the lower die 14 (i.e., at the bottom dead center), and taking a value gradually decreasing from 1 as the upper die 13 mounted to the press shaft 12 is located farther away from the position where the upper die 13 is pressed against the lower die 14 (eventually, taking a value of 0 when the upper die 13 mounted to the press shaft 12 is positioned at the top dead center). For example, the certain function is expressed by "1 - | position where the upper die mounted to the press shaft is pressed for forming against the lower die - current rotational position of the crank mechanism for the press shaft | (absolute value)". Thus, as the current rotational position of the crank mechanism for the press shaft is closer to the position where the upper die mounted to the press shaft is pressed for forming against the lower die, the position coefficient processing unit 8 assigns a larger weight to the estimated disturbance value because of a higher possibility that the intrusion of the foreign body may occur in relation to the operation of the press shaft. On the other hand, as the current rotational position of the crank mechanism for the press shaft is farther away from the position where the upper die mounted to the press shaft is pressed for forming against the lower die, the position coefficient processing unit 8 assigns a smaller weight to the estimated disturbance value because of a lower possibility that the intrusion of the foreign body may occur in relation to the operation of the press shaft.

As a result, in detecting the intrusion of the foreign body, the embodiment of the present invention makes it possible to more easily determine a set value which is to be preset in the comparator 10 as described later, and to realize the detection with higher accuracy and higher reliability than the first embodiment. Because the specifications of the press machine, such as a gear ratio between the mechanical mechanism using the plurality of gears to drive the upper die mounted to the press shaft and the servomotor are known in advance, the position where the upper die mounted to the press shaft is pressed for forming against the lower die can be previously set or confirmed before the press machine starts the normal operation. Therefore, the above-described processing in the position coefficient processing unit 8 can be executed without problems.

During a period in which the crank mechanism 11 for the press shaft 12 of the press machine according to an embodiment of the present invention rotates through 360°, the integrator 9 continuously integrates an output value of the position coefficient processing unit 8 and outputs an integrated value to the comparator 10. The comparator 10 compares a set value defined in advance with the output value of the integrator 9 and detects the presence of a disturbance if the output value of the integrator 9 exceeds the set value.

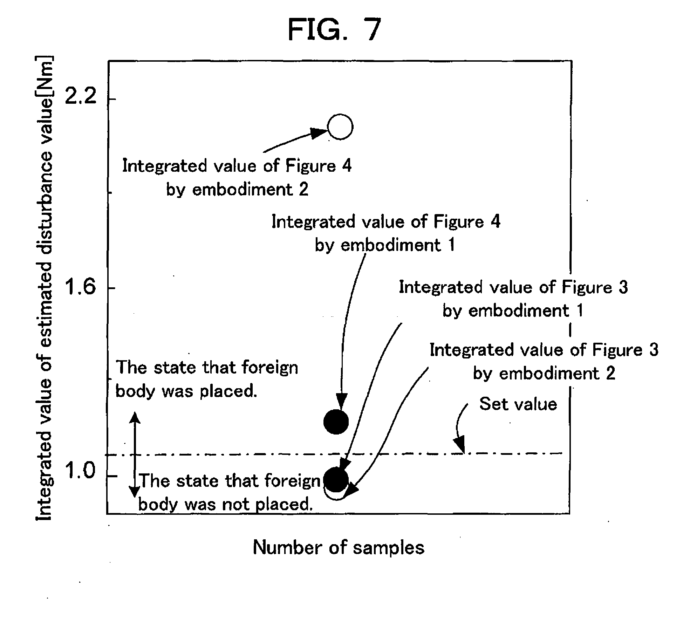

Fig. 7 is a graph illustrating an integrated result of the estimated disturbance value when the foreign body is placed (caught) in the press machine according to the embodiment of the present invention. In the graph of Fig. 7, the vertical axis represents the integrated value of the estimated disturbance value over the range in which the crank mechanism 11 for the press shaft 12 rotates from 110° to 250°, and the horizontal axis represents the total number of samples (sampling points) over the range in which the crank mechanism 11 for the press shaft 12 rotates from 110° to 250°.

A white circle at a lower position in Fig. 7 represents a value obtained by, when the intrusion of the foreign body is not caused, namely when only the steady disturbance is generated, (e.g., in the state illustrated in Fig. 3), continuously integrating the output resulting from executing the position coefficient processing according to the second embodiment on the estimated disturbance value during the period in which the crank mechanism 11 rotates from 110° to 250°. A white circle at an upper position in Fig. 7 represents a value obtained by, when the intrusion of the foreign body is caused (e.g., in the state illustrated in Fig. 4), continuously integrating the output resulting from executing the position coefficient processing according to the second embodiment on the estimated disturbance value during the period in which the crank mechanism 11 for the press shaft 12 rotates from 110° to 250° (i.e., over the angular range from 110° to 250° of the crank mechanism 11 in which the disturbance originating in the intrusion of the foreign body occurs as illustrated in Fig. 4). In Fig. 7, as in Figs. 3 and 4, data is sampled at intervals of 3 ms. In any of the two cases where the intrusion of the foreign body occurs and where it does not occur, therefore, the data is integrated during a period of 7.75 s over 2600 samples corresponding to the angular range from 110° to 250° of the crank mechanism 11.

Black circles in Fig. 7 are the same as those in Fig. 5 representing the first embodiment. The black circles are plotted in Fig. 7 to clearly indicate a more significant advantage of the second embodiment in a comparative manner between the first embodiment and the second embodiment.

Thus, in the second embodiment, a more apparent difference in the integrated value can be obtained than in the first embodiment between when only the steady disturbance is generated and when the intrusion of the foreign body is caused. Further, the set value to be preset in the comparator can be more easily defined, and the intrusion of the foreign body can be detected only when the intrusion of the foreign body is caused.

As seen from comparing Fig. 5 and Fig. 7, the set value to be preset in the comparator can be more easily defined because of a larger difference in the integrated value between when only the steady disturbance is generated and when the intrusion of the foreign body is caused.

While, in the first and second embodiments described above, the control device detects an abnormal disturbance (i.e., the state of the foreign body being caught in) by comparing the integrated value of the absolute value of the estimated disturbance value with the set value defined in advance, the control device may merely execute sampling comparison for the integrated value of the absolute value of the estimated disturbance value. For example, it is possible to make sampling (to store sampled data) for the absolute value of the integrated value of the estimated disturbance value per control cycle and to determine the presence of an abnormality based on change between the integrated value of the estimated disturbance value, which is obtained by the current sampling, and the integrated value of the estimated disturbance value, which has been obtained by sampling in the cycle just preceding or several cycles before.

Also, while in the first and second embodiments the control device has been described as a servo amplifier or the like for "supplying electric power to the motor" (such as for receiving commands regarding a position, velocity, torque, etc. from, e.g., an upper-level device, executing control calculations regarding the position, velocity, torque, etc., and outputting voltages or currents corresponding to the received commands), the above-described disturbance observer and intrusion detection section may also be configured to have similar functions. As another example, those functions can also be provided by an upper-level device such as a controller capable of generating commands.

Further, in the second embodiment described above, the function used in the position coefficient processing unit for applying a weight to the estimated disturbance value depending on the position of the upper die mounted to the press shaft with respect to the generation of the intrusion of the foreign body is set to provide such a coefficient as taking a value of 1 at the position where the upper die mounted to the press shaft is pressed against the lower die (i.e., at the bottom dead center), and taking a value gradually decreasing from 1 as the upper die mounted to the press shaft is located farther away from the position where the upper die is pressed against the lower die (eventually, taking a value of 0 when the upper die mounted to the press shaft is positioned at the top dead center). Thus, the certain function is expressed, for example, by "1 - | position where the upper die mounted to the press shaft is pressed for forming against the lower die - current rotational position of the crank mechanism for the press shaft | (absolute value)". It is, however, a matter of course that a practically usable function is not limited to the above-mentioned function and some other suitable function capable of applying a weight to the estimated disturbance value depending on the motor position(the position of the upper die) can also be used.

## Claims

1. A press machine having a press shaft (12) and a cushion shaft (15) for cooperatively pressing a workpiece, the press machine comprising;
a motor (1) for driving an upper die (13), which is mounted to the press shaft (12), through a mechanical mechanism;
a crank mechanism (11) for converting a rotary motion to a reciprocating motion; and
a motor control device for supplying electric power to the motor, wherein the motor control device includes a disturbance observer unit (2) for calculating an estimated disturbance value with respect to the motor based on a torque command and a motor velocity, and
an intrusion detection section (3, 4, 5, 7, 8, 9, 10) for detecting, based on the estimated disturbance value, a state of a foreign body being caught between the press shaft and the cushion shaft
**characterized in that**
the intrusion detection section comprises an absolute value calculation unit (7) for receiving the estimated disturbance value and calculating an absolute value of the estimated disturbance value,
a position coefficient processing unit (8) for receiving the absolute value of the estimated disturbance value and assigning a weight to the estimated disturbance value depending on a position of the upper die,
an integrator (9) for integrating an output of the position coefficient processing unit during a period in which the upper die is moved over a predetermined zone within a movable range of the upper die, and
a comparator (10) for receiving an output of the integrator, comparing the output of the integrator with a set value defined in advance, and determining whether the state of the foreign body being caught in is present, and
that when the output of the integrator exceeds the set value defined in advance, the comparator determines that the state of the foreign body being caught in is present.

2. The press machine according to Claim 1, wherein the position coefficient processing unit has a function for changing a coefficient depending on a position of the upper die within a vertically movable range thereof such that the coefficient takes a value of 1 when the upper die is positioned at the bottom dead center, and takes a value gradually decreasing from 1 as the upper die is positioned farther away from the bottom dead center thereof, and
wherein the position coefficient processing unit outputs a value calculated as the product of the coefficient decided based on the function and the absolute value of the estimated disturbance value.

3. The press machine according to Claim 1 or 2, wherein the intrusion detection section comprises an absolute value calculation unit (7) for receiving the estimated disturbance value and calculating an absolute value of the estimated disturbance value,
a position coefficient processing unit (8) for receiving the absolute value of the estimated disturbance value and assigning a weight to the estimated disturbance value depending on a position of the upper die,
an integrator (9) for integrating an output of the position coefficient processing unit during a period in which the upper die is moved over a predetermined zone within a movable range of the upper die, and
a comparator (10) for sampling an output of the integrator per predetermined time, comparing a current sampling value with a sampling value in a just preceding cycle or a further before cycle, and determining, based on a comparison result, whether the state of the foreign body being caught in is generated, and
wherein when the output of the integrator exceeds the set value defined in advance, the comparator determines that the state of the foreign body being caught in is generated.

4. The press machine according to anyone of Claims 1 to 3, wherein when the motor control device detects the state of the foreign body being caught in, the press machine outputs, to the exterior, information indicating the state of the foreign body being caught in.

## Patentansprüche

1. Presse mit einer Pressenwelle (12) und einer Auflagerwelle (15), um in deren Zusammenwirken ein Werkstück zu pressen, wobei die Presse umfasst:
einen Motor (1) zum Antreiben einer oberen Matrize (13), der über einen mechanischen Mechanismus mit der Pressenwelle (12) verbunden ist;
einen Kurbelmechanismus (11) zum Umwandeln einer Drehbewegung in eine Hin- und Herbewegung; und
eine Motorsteuereinrichtung zum Versorgen des Motors mit elektrischer Energie, wobei die Motorsteuereinrichtung eine Störgrößen-Beobachtungseinheit (2) zum Berechnen eines geschätzten Störgrößenwertes bezüglich des Motors, basiert auf einem Drehmomentbefehl und einer Motorgeschwindigkeit, einschließt, und
einen Eindringdetektierabschnitt (3,4,5,7,8,9,10) zum Feststellen basierend auf dem geschätzten Störgrößenwert den Zustand eines Fremdkörpers feststellt, der zwischen der Pressenwelle und der Auflagerwelle gefangen ist,
dadurch gekenntzeichnet, dass
der Eindringdetektierabschnitt umfasst:
eine Absolutwertberechnungseinheit (7), um den geschätzten Störgrößenwert entgegenzunehmen und einen Absolutwert des geschätzten Störgrößenwertes zu berechnen,
eine Positionskoeffizientenverarbeitungseinheit (8), um den Absolutwert des geschätzten Störgrößenwertes entgegenzunehmen und abhängig von einer Position der oberen Matrize dem geschätzten Störgrößenwert ein Gewicht zuzuweisen,
einen Integrator (9) zum Integrieren eines Ausgangswertes der Positionskoeffizientenverarbeitungseinheit während einer Zeitspanne, in welcher die obere Matrize über einen vorbestimmten Bereich innerhalb eines Bewegungsbereiches der oberen Matrize bewegt wird, und
einen Komparator (10), um einen Ausgangswert des Integrators entgegen zu nehmen, den Ausgangswert des Integrators mit einem vorher definierten festgelegten Wert zu vergleichen und zu bestimmen, ob der Zustand des eingezogenen Fremdkörpers zutrifft, und dass, wenn der Ausgangswert des Integrators den vorher definierten festgelegten Wert übersteigt, der Komparator bestimmt, dass der Zustand des eingezogenen Fremdkörpers zutrifft.

2. Presse nach Anspruch 1, worin die Positionskoeffizientenverarbeitungseinheit eine Funktion hat, um einen Koeffizienten abhängig von einer Position der oberen Matrize innerhalb eines vertikalen Bewegungsbereichs dieser der Art zu verändern, dass der Koeffizient einen Wert von 1 annimmt, wenn die obere Matrize am unteren Totpunkt positioniert ist, und einen Wert annimmt, der gleichmäßig von 1 abnimmt, die obere Matrize weiter weg von ihrem unteren Totpunkt positioniert wird, und
worin die Positionskoeffizientenverarbeitungseinheit einen Wert ausgibt, der als das Produkt des basierend auf der Funktion festgelegten Koeffizienten und des Absolutwerts des geschätzten Störgrößenwertes berechnet wird.

3. Presse nach Anspruch 1 oder 2, worin der Eindringdetektierabschnitt eine Absolutwertberechnungseinheit (7) umfasst, um den geschätzten Störgrößenwert entgegenzunehmen und einen Absolutwert des geschätzten Störgrößenwertes zu berechnen,
eine Positlonskoeffizientenverarbeitungseinheit (8), um den Absolutwert des geschätzten Störgrößenwertes entgegenzunehmen und abhängig von einer Position der oberen Matrize dem geschätzten Störgrößenwert ein Gewicht zuzuweisen,
einen Integrator (9) zum Integrieren eines Ausgangswertes der Positionskoeffizientenverarbeitungseinheit während einer Zeitspanne, in welcher die obere Matrize über einen vorbestimmten Bereich innerhalb eines Bewegungsbereiches der oberen Matrize bewegt wird, und
einen Komparator (10) aufweist, um einen Ausgangswert des Integrators je vorbestimmter Zeit abzufragen, einen aktuellen Stichprobenwert mit einem Stichprobenwert in einem gerade vorhergehenden Zyklus oder einem weiter zurückliegenden Zyklus zu vergleichen und, basierend auf einem Vergleichsergebnis, zu bestimmen, ob der Zustand eines eingezogenen Fremdkörpers erzeugt wird, und
worin, wenn der Ausgangswert des Integrators den vorher definierten festgelegten Wert übersteigt, der Komparator bestimmt, dass der Zustand des eingezogenen Fremdkörpers erzeugt wird.

4. Presse nach einem der Ansprüche 1 bis 3, worin, wenn die Motorsteuereinrichtung den Zustand eines eingezogenen Fremdkörpers erkennt, die Presse nach außen Information ausgibt, die den Zustand des eingezogenen Fremdkörpers anzeigt.

## Revendications

1. Presse comportant un arbre de presse (12) et un arbre élastique (15) destinés à presser en coopérant une pièce d'oeuvre, la presse comprenant ;
un moteur (1) destiné à entraîner une matrice supérieure (13), qui est montée sur l'arbre de presse (12), par l'intermédiaire d'un dispositif mécanique ;
un mécanisme à excentrique (11) destiné à transformer un mouvement rotatif en un mouvement alternatif ; et
un dispositif de commande de moteur destiné à délivrer de l'énergie électrique au moteur, dans lequel le dispositif de commande de moteur comporte une unité d'observation de perturbation (2) destinée à calculer une valeur de perturbation estimée par rapport au moteur sur la base d'une consigne de couple et d'une vitesse de moteur, et
une section de détection d'intrusion (3, 4, 5, 7, 8, 9, 10) destinée à détecter, sur la base de la valeur de perturbation estimée, un état correspondant à un corps étranger bloqué entre l'arbre de presse et l'arbre élastique
**caractérisée en ce que**
la section de détection d'intrusion comprend une unité de calcul de valeur absolue (7) destinée à recevoir la valeur de perturbation estimée et à calculer une valeur absolue de la valeur de perturbation estimée,
une unité de traitement de coefficient de position (8) destinée à recevoir la valeur absolue de la valeur de perturbation estimée et à affecter un coefficient de pondération à la valeur de perturbation estimée en fonction d'une position de la matrice supérieure,
un élément d'intégration (9) destiné à intégrer une sortie de l'unité de traitement de coefficient de position au cours d'une période dans laquelle la matrice supérieure est déplacée sur une zone prédéterminée à l'intérieur d'une plage de déplacement de la matrice supérieure, et
un comparateur (10) destiné à recevoir une sortie de l'élément d'intégration, comparant la sortie de l'élément d'intégration avec une valeur définie au préalable, et déterminant si l'état correspondant à un corps étranger bloqué à l'intérieur est présent, et
**en ce que** lorsque la sortie de l'élément d'intégration excède la valeur déterminée définie au préalable, le comparateur détermine que l'état correspondant à un corps étranger bloqué à l'intérieur est présent.

2. Presse selon la revendication 1, dans laquelle l'unité de traitement de coefficient de position présente une fonction destinée à modifier un coefficient en fonction d'une position de la matrice supérieure, à l'intérieur d'une plage de déplacement vertical de celle-ci de telle sorte que le coefficient prend une valeur de 1 lorsque la matrice supérieure est positionnée au point mort bas, et prend une valeur diminuant progressivement à partir de 1 lorsque la matrice supérieure est positionnée plus loin de son point mort bas, et
dans laquelle l'unité de traitement de coefficient de position délivre une valeur calculée comme le produit du coefficient décidé sur la base de la fonction et de la valeur absolue de la valeur de perturbation estimée.

3. Presse selon la revendication 1 ou 2, dans laquelle la section de détection d'intrusion comprend une unité de calcul de valeur absolue (7) destinée à recevoir la valeur de perturbation estimée et à calculer une valeur absolue de la valeur de perturbation estimée,
une unité de traitement de coefficient de position (8) destinée à recevoir la valeur absolue de la valeur de perturbation estimée et à affecter un coefficient de pondération à la valeur de perturbation estimée en fonction d'une position de la matrice supérieure,
un élément d'intégration (9) destiné à intégrer une sortie de l'unité de traitement de coefficient de position au cours d'une période dans laquelle la matrice supérieure est déplacée sur une zone prédéterminée à l'intérieur d'une plage de déplacement de la matrice supérieure, et
un comparateur (10) destiné à échantillonner une sortie de l'élément d'intégration par période prédéterminée, à comparer une valeur d'échantillonnage courante avec une valeur d'échantillonnage dans un cycle juste précédent ou un cycle antérieur à ce dernier, et à déterminer, sur la base du résultat de comparaison, si l'état correspondant à un corps étranger bloqué à l'intérieur est présent, et
dans laquelle, lorsque la sortie de l'élément d'intégration excède la valeur déterminée définie au préalable, le comparateur détermine que l'état correspondant à un corps étranger bloqué à l'intérieur est présent.

4. Presse selon l'une quelconque des revendications 1 à 3, dans laquelle lorsque le dispositif de commande de moteur détecte l'état correspondant à un corps étranger bloqué à l'intérieur, la presse délivre, à l'extérieur, des informations indiquant l'état correspondant à un corps étranger bloqué à l'intérieur.
